# EUROPÄISCHE PATENTSCHRIFT

(11) **EP 2 049 403 B1**
(45) Veröffentlichungstag und Bekanntmachung des Hinweises auf die Patenterteilung: **29.06.2011**
(21) Anmeldenummer: 07763958.1
(22) Anmeldetag: 20.07.2007
(51) Int. Cl.: B65B 69/00, B65G 69/18

(54) **DOSIERELEMENT AN EINEM BEHÄLTER FÜR FLIESS- ODER SCHÜTTGÜTER**
METERING ELEMENT ON A CONTAINER FOR FLOWABLE OR BULK GOODS
ÉLÉMENT DOSEUR SUR UN RÉCIPIENT POUR DES MATÉRIAUX COULANTS OU EN VRAC

(30) Priorität: 08.08.2006 CH 12722006
(43) Veröffentlichungstag der Anmeldung: 22.04.2009
(73) Patentinhaber: Mettler-Toledo AG, 8606 Greifensee (CH)
(72) Erfinder: BOHLER, Lorenz, 4313 Möhlin (CH)
(86) Internationale Anmeldenummer: PCT/CH2007/000358
(87) Internationale Veröffentlichungsnummer: WO 2008/017175

(56) Entgegenhaltungen:
- EP-A- 0 201 327
- WO-A-00/47473
- WO-A-2005/056443
- DENK R: "STAUBFREI IM GRIFF. AUSLAUFANSCHLUSSSYSTEM FUER DIE BIG- BAG- ENTLEERUNG" CHEMIETECHNIK, HUTHIG, HEIDELBERG, DE, Bd. 27, Nr. 7, Juli 1998 (1998-07), Seite 76, XP000777414 ISSN: 0340-9961

## Beschreibung

Die Erfindung betrifft ein Dosierelement an einem Behälter für Fliess- oder Schüttgüter gemäss dem Oberbegriff des Anspruchs 1 sowie ein Verfahren zum Abfüllen von Fliess- oder Schüttgütern gemäss Anspruch 9.

Dosierelemente (s.z.B. EP-A-0 201 327) werden in Bereichen eingesetzt, in denen aus einer Vielzahl verschiedener pulver- oder granulatförmiger Ausgangsstoffe im Verlauf eines oder mehrerer Mischungs- und/oder Veredlungsprozesse ein Endprodukt hergestellt wird. Beispielhaft sei hierfür die Chemische wie auch die Pharmazeutische Industrie genannt. Während Rezepturen im Entwicklungsstadium im Labormassstab aus Kleinstmengen gemischt werden, kommen in der Produktion des fertigen Endproduktes Ausgangsstoffe im industriellen Mengenmassstab zum Einsatz, da nur dadurch eine ausreichende Chargengrösse und somit eine wirtschaftliche Produktion gewährleistet werden kann. Besonders in der Pharmazeutisch-Chemischen Industrie spielt, neben der Reinheit der Ausgangsprodukte, v.a. die Sauberkeit der eingesetzten Instrumente und Gerätschaften eine herausragende Rolle, da nur durch ein konsequentes Qualitätsmanagement, die mittlerweile in fast allen Industriebereichen im Rahmen von Zertifizierungsprozessen etablierten Qualitätsstandards eingehalten werden können. Es ist hierbei besonders wichtig, die verwendeten Geräte unmittelbar nach der Verwendung z.T. äusserst aufwändigen Reinigungsprozeduren zu unterziehen, bevor diese nach dem Durchlaufen von diversen Hygienetests und Funktionskontrollen wieder eingesetzt werden können. Herausragende Bedeutung kommt bei der Produktion von Chemikalien v.a. bei der Medikamentenherstellung, dem Transfer von Ausgangs- oder Zwischenprodukten in die Zwischenlager- und/oder Mischgefässe und am Ende des Produktionsprozesses in Transport- oder Lagergebinde zu.

Um definierte Mengen von Rezepturbestandteilen auch in grossen Mengen möglichst genau dosieren zu können werden Dosierelemente mit variablen Auslassöffnungen verwendet. Diese können zwischen den Behältern aber auch im Innern von Schlauchleitungen angebracht werden, um den Produktstrom in Abhängigkeit von den Anforderungen an die Dosierpräzision und -geschwindigkeit manuell oder automatisiert steuern zu können.

Das Problem eines derartigen Dosierelementeinsatzes ist es, dass zumindest die Innenseite des Elements während des Abfüll- bzw. Dosiervorgangs permanent mit dem zu dosierenden Produkt in Kontakt steht. Daraus folgt, dass entweder für jede zu dosierende Substanz jeweils ein spezielles Dosierelement verwendet werden muss, um so die Verwendungsintervalle möglichst zu verlängern oder aber, v.a. im Hinblick auf die obengenannten Qualitätsstandards, nach jedem Dosiervorgang die Reinigung und Kontrolle des Dosierelementes durchzuführen, um so Substanzverschleppungen zu verhindern.

Hinzu kommt, dass der Bediener der Abfüllvorrichtung nach Beendigung des Dosiervorganges und nach Entfernen des zu befüllenden Behältnisses, für eine gewisse Zeitspanne mit dem dosierten Produkt in Kontakt kommen kann. Dies ist z.B. dann der Fall, wenn noch Produktreste im Dosierelement vorhanden sind und/oder ein zur Staubbildung neigendes, pulverförmiges Produkt dosiert wird. Eine Kontamination des Bedieners durch Haut-, Schleimhaut- oder Atemwegskontakt und eine damit u. U. einhergehende Gesundheitsgefährdung kann somit nicht ausgeschlossen werden.

Um letztgenannten Aspekt auszuschalten, bzw. um die Gefahren soweit als möglich zu reduzieren, schlägt die EP 0 853 829 A1 eine Entleerungsvorrichtung für Säcke mit einem Innen- und einem Aussensack (sog. Bulk-Bags) vor, die eine Haltevorrichtung für Bulk-Bags mit einer darunter zentral angeordneten Doppeltubusvorrichtung mit einem inneren und einem äusseren Tubus vorsieht. Diese Vorrichtung weist bevorzugt im inneren Tubus eine auf und ab bewegbare Greifvorrichtung zum Festhalten des Sackauslaufes des Innensackes auf, die mittels einer von aussen bedienbaren Zugvorrichtung von oben nach unten gezogen werden kann.

Aus der WO 2005/056443 ist eine Vorrichtung zur kontaminationsvermeidenden Entleerung bzw. Befüllung von flexiblen Schüttgutbehältern bekannt. Diese setzt einen Folienschlauch als Verbindungsglied zwischen einem zu entleerenden Gebinde und einem Verbindungsschlauch bzw. einer Einlassöffnung ein. Nach dem Befüll- bzw. Entleerungsvorgang wird dieser Folienschlauch zusammen mit dem flexiblen Behälter und/oder dem befüllten Behälter abgebunden, getrennt und der kontaminierte Folienschlauch entsorgt.

Die DE 198 06 932 A1 zeigt eine Vorrichtung zum kontaminationsfreien Austrag rieselfähiger Stoffe aus einem Vorrats- in einen Transportbehälter, bei der am Austragsrohr des Vorratsbehälters, das mit einer Verschlusseinrichtung versehen ist, ein Wechselkragen vorgesehen ist, der mit dem Transportbehälter verbunden werden kann.

Die DE 2660519 C2 schlägt eine Vorrichtung zum Befüllen von schlauchförmigen Behältern vor. Die Behälter sind im Bereich der Einfüllvorrichtung bevorratet und werden während des Befüllvorgangs über diese abgezogen. Die schlauchförmigen Behälter werden nach dem Befüllen verschlossen und verbleiben, wie im Beispiel gezeigt, als Nahrungsmittelhülle am Produkt.

Die vorgenannten Vorrichtungen weisen verschiedene Nachteile auf. Zwar wird bei allen Vorrichtungen der unbeabsichtigte Austritt von Füllgut so weit als möglich verhindert und damit die Kontamination der Umgebung und der Bediener weitestgehend reduziert, das Füllgut steht allerdings bei allen vorgeschlagenen Vorrichtungen während des Um- oder Befüllvorganges in Kontakt mit den Befüllvorrichtungen und/oder Dosierelementen. In sensiblen Bereichen wird daher nach der Verwendung derartiger Vorrichtungen eine Reinigung und/oder Dekontamination der gesamten Befüll- bzw. Dosiervorrichtung nötig. Eine entsprechende Reinigung ist mit hohem Zeit- und Kostenaufwand verbunden und zieht eine Reihe von Kontrollen nach sich, bevor die Befüll- bzw. Dosiervorrichtung wieder einsetzbar ist.

Aufgabe der vorliegenden Erfindung ist es, eine Möglichkeit zur kontaminationsfreien Verwendung und schnellen, einfachen und kostengünstigen Reinigung von Dosierelementen zu schaffen.

Die Aufgabe wird durch ein Dosierelement an einem Behälter für Fliess- oder Schüttgüter mit den kennzeichnenden Merkmalen des Anspruchs 1 und ein Verfahren zum Abfüllen von Füll- oder Schüttgütern gemäss Anspruch 9 gelöst. Weitere bevorzugte Ausführungsformen der Erfindung sind Bestandteil der abhängigen Ansprüche.

Die vorliegende Erfindung sieht ein Dosierelement an einem Behälter für Fliess- oder Schüttgüter mit einem in das Dosierelement hineinragenden Auslaufstutzen vor. Das Dosierelement umfasst eine Einlassöffnung an der dem Behälter zugewandten Seite, ein Klemmprofil und/oder eine Schnellspannvorrichtung zum lösbaren Verbinden von Auslaufstutzen und Dosierelement, eine schlitzförmige Auslassöffnung in der vom Behälter abgewandten Seite, einen Ringspalt zwischen Auslaufstutzen und Einlassöffnung, eine sich zwischen Einlass- und Auslassöffnung erstreckende Wandung mit einer Innen- und einer Aussenseite und ein, im Bereich des Auslaufstutzens bevorratetes, folienförmiges Material, insbesondere eine Kunststofffolie vor. Als Behälter kann ein Vorratsbunker verwendet werden, mit dem der Auslaufstutzen fest verbunden, beispielsweise verschweisst ist. Darüber hinaus es ist jedoch auch möglich, das Dosierelement an einem Behälter in Form eines Trichters, in dessen Einfüllstutzen z.B. Säcke eingelegt werden können, anzubringen oder der unter die Auslassöffnungen von Grosssilos verbracht werden kann.

Weiterhin ist vorgesehen, dass die Einlassöffnung, die Innenseite der Wandung und die schlitzförmige Auslassöffnung mit dem folienförmigen Material überdeckt ist.

Eine bevorzugte Ausführungsform der Erfindung sieht vor, dass das bevorratete folienförmige Material als Endlosschlauch ausgeformt ist. Darüber hinaus ist auch eine Bevorratung in Form von einzelnen Schlauchabschnitten möglich. Diese können vor dem Aufsetzen des Dosierelementes bzw. vor dem Dosiervorgang über bzw. durch das Dosierelement gezogen werden oder ebenfalls im Bereich des Auslassstutzens des Behälters bevorratet werden. Möglich ist zudem, einen endlosen Folienschlauch zu bevorraten, der an definierten Positionen Perforationen aufweist und durch Abreissen in Schlauchabschnitte vereinzelt wird. Eine weitere bevorzugte Ausführungsform sieht vor, das folienförmige Material als Endlosfolienband vorzuhalten, das erst im Moment der Verwendung, also mit dem Einführen des Folienmaterials in den Ringspalt zwischen Auslaufstutzen und Einlassöffnung, durch eine im Bereich der Einlassöffnung vorgesehene Längsnaht-Folienschweissvorrichtung zu einem Schlauch verschweisst wird. Bei Verwendung eines Endlosschlauches bzw. einer Endlosfolie ist vorteilhafterweise eine Folientrennvorrichtung im Bereich einer der Öffnungen vorgesehen, um bevor ein neuer Schlauchabschnitt eingezogen wird, eine saubere Trennung des verschmutzten Schlauchbereichs zu gewährleisten. In Abhängigkeit vom verwendeten Folienmaterial können zur Trennung beispielsweise Messer oder Glühdrähte eingesetzt werden.

Darüber hinaus ist es selbstverständlich denkbar, dass aus dem Folienschlauch selbst, durch zusätzliches Verschweissen der entsprechenden Seitenkante, ein Sack für die Befüllung mit den zu dosierenden Substanzen gebildet wird, der nach dem Füllvorgang entweder durch die vorgenannten Trennvorrichtungen oder beispielsweise mit einer Klemme verschlossen wird.

Um sicherzustellen, dass das durch das Dosierelement geführte schlauchförmige Folienmaterial, der Schlauchabschnitt oder der Foliensack während des Füll- bzw. Dosiervorgangs nicht abrutscht oder aus dem Dosierelement herausgezogen wird, erweist es sich als besonders vorteilhaft, wenn das folienförmige Material lösbar, insbesondere durch wenigstens eine Klemme, einen Schnellspanner, ein Bridenband, eine Schlauchbride und/oder ein Spannband mit dem Auslaufstutzen verbunden ist. Diese Klemmen oder Schnellspanner können entweder am Dosierelement selbst befestigt sein, und dadurch gleichzeitig zum Befestigen des Dosierelementes am Auslaufstutzen durch Klemmen des Dosierelementes verwendet werden, oder aber in Form eines separaten, umlaufenden, mit den entsprechenden Spann- oder Klemmvorrichtungen versehenen Bandes oder Ringes ausgebildet sein.

Eine bevorzugte Ausführungsform der vorliegenden Erfindung sieht vor, zwischen dem Auslaufstutzen des Behälters und der Einlassöffnung des Dosierelementes ein als Stutzen ausgebildetes Zwischenstück vorzusehen, durch das das folienförmige Material hindurchgeführt wird. Das Zwischenstück weist an einer seiner Enden eine umlaufende Dichtmanschette auf, die eine zusätzliche Befestigung des folienförmigen Materials bewirkt. Die Dichtmanschette kann dabei in Form einer aus einem elastischen Material geformten Lippe, die in Gleitkontakt auf den Auslaufstutzen aufgeschoben wird, ausgebildet sein. Ausserdem ist die Verwendung eines plastischen Klemmprofils möglich, das mittels pneumatischer Aktoren oder durch Schnellspanner bzw. Spannschrauben verspannt werden kann. Darüber hinaus kann ein mit dem Zwischenstück verbundenes, umlaufendes und schlauchförmiges Dichtprofil vorgesehen sein, das zum Klemmen des Zwischenstückes und/oder des folienförmigen Materials aufgeblasen wird. Das Dichtprofil kann dabei von einem u-förmigen Profil aufgenommen werden, das durch Anschweissen oder Abkanten gleichzeitig eine ein- und/oder beidseitige Verlängerung aufweist und somit das Zwischenstück bildet.

Die vorgenannten Klemm- bzw. Spannvorrichtungen können selbstverständlich für alle im Zusammenhang mit der vorliegenden Erfindung stehenden Klemm- und Spannaufgaben Anwendung finden und sind nicht ausschliesslich auf die Verwendung mit dem vorgenannten Zwischenstück beschränkt.

Die vorliegende Erfindung umfasst weiterhin ein Verfahren zum Abfüllen von Füll- oder Schüttgütern. Dabei ist vorgesehen, dass ein schlauchförmiges Folienmaterial zunächst über einen Ringspalt, der zwischen einem unverspannten Dosierelement und einem in dieses hineinragenden Auslaufstutzen besteht zugeführt, der Folienschlauch dann durch das Dosierelement hindurchgeführt und schliesslich durch eine schlitzförmige Auslassöffnung aus dem Dosierelement herausgeführt wird. Somit wird erreicht, dass die Einlassöffnung, die Innenseite der Wandung und die schlitzförmige Auslassöffnung des Dosierelementes mit dem folienförmigen Material überdeckt ist. Bevorzugt wird das Folienmaterial durch Klemmen mit dem Auslaufstutzen verbunden. Hierfür können alle bereits oben beschriebenen Klemm- und Spannvorrichtungen verwendet werden. Bei Verwendung eines bandförmigen Folienmaterials ist es gemäss einer Ausführungsform der vorliegenden Erfindung vorgesehen, dieses nach dem Zuführen über den Ringspalt und vor dem Hindurchführen durch das Dosierelement zu einem Folienschlauch zu verschweissen, um einen Austritt des Dosiergutes zu verhindern. Wird ein wenig gefährliches Gut dosiert oder wenn keine besonderen Hygienevorgaben einzuhalten sind, ist es auch möglich, bei einem entsprechend hohen Überdeckungsgrad der Längskanten des Folienbandes, dieses ohne Verschweissen zu verwenden.

Bevorzugt wird zwischen dem Auslassstutzen und dem Dosierelement ein zusätzliches, insbesondere mit einer plastischen Dichtmanschette oder anderen bereits vorher beschriebenen Klemm- bzw. Spannvorrichtungen versehenes Zwischenstück eingefügt, das den Folienschlauch nach Entfernung des Dosierelementes in seiner Position am Auslassstutzen fixiert und das Entfernen bzw. den Austausch des Folienschlauchs erleichtert.

Bei der Verwendung eines entsprechend bedeckten Dosierelementes kommt dieses zu keiner Zeit mit dem zu dosierenden Produkt in Verbindung und wird somit nicht durch dieses verschmutzt und/oder kontaminiert. Eine Reinigung und die dazu nötige Demontage der gesamten Dosiervorrichtung kann somit unterbleiben, da vor einem neuerlichen Dosier- bzw. Abfüllvorgang einfach ein neuer unbenutzter Schlauchabschnitt in das Dosierelement eingezogen wird. Dadurch entfällt der ansonsten fällige Zeitaufwand für die aufwändige Reinigung wodurch die zusätzlichen Arbeitskosten sowie die Aufwendungen für umfangreiche Hygiene- und Funktionskontrollen erheblich reduziert werden können. Auch im Hinblick auf die Belastungen für das Bedienungs- und v.a. das Reinigungspersonal sowie die Umweltverträglichkeit bietet das vorgeschlagene Verfahren bedeutende Verbesserungen. Bei herkömmlichen Dosierelementen und/oder -vorrichtungen müssen, besonders bei der Verwendung aggressiver Substanzen, Vorkehrungen zum Schutz des Personals und der Umwelt getroffen werden. Dies bedeutet beispielsweise, dass die verwendeten Dosiervorrichtungen zum Reinigen in spezielle Räume verbracht, u.U. mit speziellen Reinigungsgeräten und -substanzen behandelt und anfallende Abwässer und/oder Reinigungsgegenstände getrennt entsorgt werden müssen.

Bei Verwendung der vorliegenden Erfindung und Anwendung des erfindungsgemässen Verfahrens entfällt dieser erhebliche Aufwand, da lediglich der Folienschlauch bzw. -abschnitt der mit dem Produkt in Kontakt stand nach Beendigung der Dosieraufgabe bzw. nach vollständiger Entleerung des Behälters, entsorgt werden muss.

Zusätzlich ist es durch die vorliegende Erfindung möglich, bei grossen Behältern, wie beispielsweise Silos, ein sog. Cleaning-in-Place-(Cip-)Verfahren, d.h. das Reinigen an Ort und Stelle ohne Demontage, durchzuführen. War man bisher gezwungen, das verschmutzte Dosierelement vollständig zu demontieren, um es von anhaftenden Reinigungsmitteln bzw. ausgespülten Produktrückständen zu reinigen und vor dem erneuten Einsatz den bereits genannten Kontrollen zu unterziehen, so entfällt dieser Aufwand, weil nur noch der das Dosierelement bedeckende Folienschlauch bzw. Folienschlauchabschnitt entfernt und entsorgt werden muss.

Zum Entfernen des Folienschlauches aus dem Dosierelement sind je nach verwendetem Folienschlauch zwei Vorgehensweisen möglich. Bei Verwendung von einzelnen Schlauchabschnitten wird nach dem Dosier-, Entleerungs- bzw. Reinigungsvorgang zunächst die Klemme bzw. der Schnellspanner am Dosierelement entspannt und das Dosierelement vom Auslaufstutzen abgezogen. Der Schlauch wird nun oberhalb des Dosierelementes abgebunden. Bei Verwendung eines Zwischenstückes mit einer Dichtmanschette, wird dieses in Richtung zum Vorratsbehälter hin auf dem Auslaufstutzen verschoben. Ist am Zwischenstück anstelle der Dichtmanschette ein schlauchförmiges, aufblasbares Dichtprofil vorgesehen, so wird dieses zunächst durch das am Dichtprofil angebrachte Pneumatikventil entlüftet und dann, wie oben beschrieben, verschoben. Ist der Folienschlauch mit einer separaten Spann- oder Klemmvorrichtung, beispielsweise mit einem einen Schnellspanner oder einer Spannschraube aufweisenden Ring oder Band, am Auslaufstutzen fixiert, muss diese ebenfalls gelöst werden. Sodann wird der aus der schlitzförmigen Auslassöffnung des Dosierelementes herausragende Schlauchabschnitt abgebunden, um den weiteren Austritt von noch im Schlauch vorhandenem Fliess- oder Schüttgutes oder der Reinigungslösung zu verhindern. Das Dosierelement kann nun vom Schlauch abgezogen und dieser danach zur Entsorgung vollständig vom Auslaufstutzen entfernt werden. Bei der Verwendung eines im Bereich des Auslaufstutzen bevorrateten Endlosfolienschlauches ist die Vorgehensweise ähnlich, lediglich wird hier der verschmutzte Schlauchabschnitt nicht vollständig abgezogen sondern soviel Folienschlauch wie nötig aus dem Vorrat nachgeführt, um wieder einen unverschmutzten Schlauchabschnitt zur Verfügung zu stellen.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht massstabsgetreuen Zeichnungen. Es zeigen:
Fig. 1 eine bevorzugte Ausführungsform eines erfindungsgemässen Dosierelementes an einem Vorratsbunker für rieselfähige Schüttgüter,
Fig. 2 eine Ausführungsform eines umlaufenden, aufblasbaren Dichtprofils an einem Zwischenstück, das zum Klemmen des Zwischenstückes am Auslaufstutzen eines Vorratsbunkers verwendet wird in Teilschnittdarstellung,
Fig. 3 eine bevorzugte Ausführungsform eines erfindungsgemässen Dosierelementes an einem Trichter für Fliessgüter, mit einem als Stutzen ausgebildeten zusätzlichen Zwischenstück,
Fig. 4 eine bevorzugte Ausführungsform eines erfindungsgemässen Dosierelementes an einem Vorratsbunker für Schüttgüter, bei dem das folienförmige Material zu einem Sack verschweisst ist,
Fig. 5a und 5b Ausführungsformen der zum Spannen verwendeten Vorrichtungen in Draufsicht, und
Fig. 6 eine Ausführungsform eines aufblasbaren Dichtprofils ebenfalls in Draufsicht.

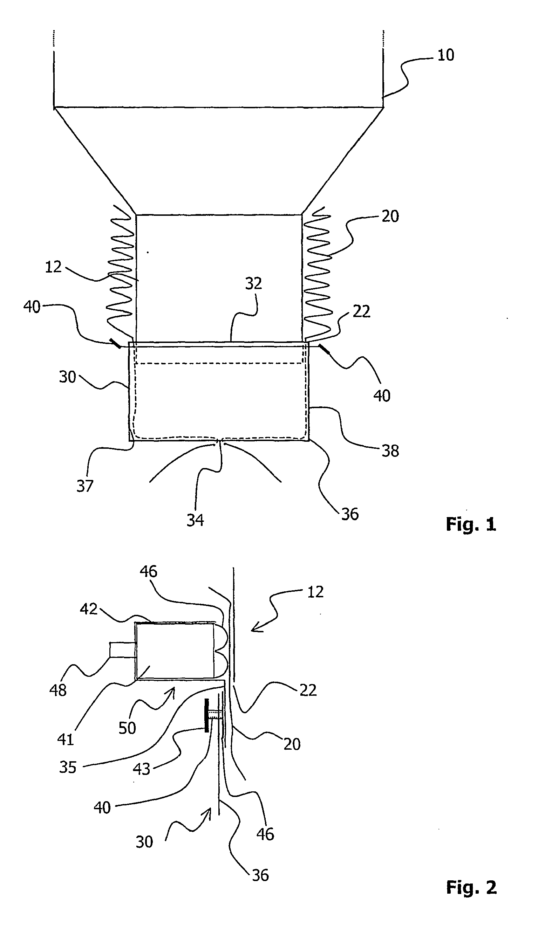

Im Ausführungsbeispiel der Fig. 1 ist das Dosierelement 30 an einem Vorratsbunker 10 für rieselfähige Schüttgüter befestigt. Im Bereich des Auslaufstutzens 12 ist ein folienförmiges Material 20 als Endlosschlauch bevorratet. Das Dosierelement 30 ist mittels Klemmen 40 im unteren Bereich des Auslaufstutzens 12 verspannt. Das folienförmige Material 20 wurde vor dem Verspannen des Dosierelementes 30 durch den Ringspalt 22 in das Dosierelement 30 ein- und durch dieses hindurchgeführt. Die Innenseite 37 wird dadurch genauso wie die Einlassöffnung 32 mit dem folienförmigen Material 20 bedeckt. Dadurch, dass das folienförmige Material 20 durch die schlitzförmige Auslassöffnung 34 aus dem Dosierelement 30 herausgeführt wird, wird die Auslassöffnung 34 ebenfalls mit dem folienförmigen Material 20 bedeckt, wodurch das Dosierelement 30 zu keiner Zeit direkt mit dem durchfliessenden Schüttgut in Kontakt kommen kann. Die schlitzförmige Auslassöffnung 34 behält trotz des durch sie hindurchgeführten folienförmigen Materials 20 ihre Funktion bei und gewährleistet eine ordnungsgemässe Dosierung der jeweiligen Fliess- oder Schüttgüter bzw. die Unterbrechung des Produktflusses.

Fig. 2 zeigt eine Ausführungsform eines Dichtprofils 41 an einem, zwischen dem Auslaufstutzen 12 des Vorratsbunkers 10 und dem Dosierelement 30 angebrachten Zwischenstück 50. Das Dichtprofil 41 ist als umlaufendes, schlauchförmiges Dichtprofil 41 mit einer Klemmfläche 46 ausgebildet. Das Dichtprofil 41 dient zunächst dazu, das folienförmige Material 20 an den Auslaufstutzen 12 anzupressen. Zusätzlich tritt durch dieses Anpressen ein Dichteffekt ein, der das Zwischenstück 50 und das daran angebrachte Dosierelement 30 abdichtet. Der Dichteffekt tritt dadurch ein, dass aufgrund des schlauchförmigen Aufbaus des Dichtprofils 41, der Luftfüllstand des Dichtprofils 41 über ein Pneumatikventil 48 gesteuert werden kann. Das Dichtprofil 41 ist von einem aus einer u-förmigen Schiene gefertigten Klemmprofil 42 aufgenommen, an dem eine das Zwischenstück 50 bildende Verlängerung durch Anschweissen oder Abkanten gebildet ist. Das Klemmprofil 42 ermöglicht es, das Zwischenstück 50 an den Auslaufstutzen 12 zu klemmen. Um das Dosierelement 30 am Zwischenstück 50 zu fixieren, ist eine Klemme 40 vorgesehen. Diese weist eine Betätigungsschraube 43 und eine Klemmfläche 46 auf. Mehrere dieser Klemmen 40 mit Klemmflächen 46 sind im Bereich des Umfangs des Zwischenstückes 50 vorgesehen. Durch Anlegen der Betätigungsschrauben 43 werden die Klemmflächen 46 in Richtung auf die Aussenseite 35 des Zwischenstückes 50 zu verschoben und fixieren dabei das folienförmige Material 20 und das Dosierelement 30 am Zwischenstück 50. Gleichzeitig wird der Ringspalt 22 weitgehend geschlossen.

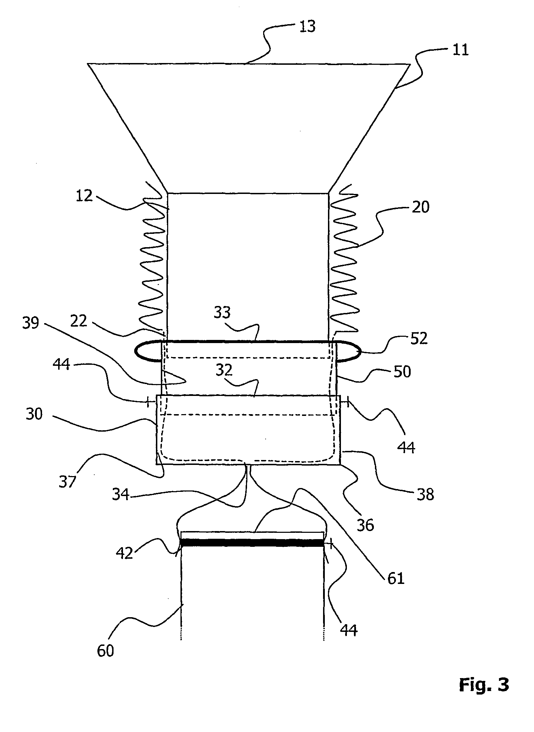

In Fig. 3 ist eine weitere bevorzugte Ausführungsform des erfindungsgemässen Dosierelementes 30 dargestellt. Anders als in Fig. 1, ist das Dosierelement 30 nicht an einem Vorratsbunker 10 angebracht sondern schliesst den Auslaufstutzen 12 eines Trichters 11 ab, der zum Abfüllen verschiedener Rezepturbestandteile, beispielsweise in der Chemischen Industrie, eingesetzt werden kann. Zusätzlich zum Dosierelement 30 verfügt der gezeigte Trichter 11 über ein zusätzliches, als Stutzen ausgebildetes Zwischenstück 50. Dieses weist an seiner dem Trichtereinlass 13 zugewandten Ende eine Dichtmanschette 52 auf, mit der zum einen das folienförmige Material 20, das im Bereich des Auslaufstutzens 12 als Endlosschlauches bevorratete ist, am Auslaufstutzen 12 fixiert, und zum anderen das Zwischenstück 50 am Auslaufstutzen 12 geklemmt werden kann. Das vom Trichtereinlass 13 abgewandten Ende des Zwischenstücks 50 ragt in das Dosierelement 30 hinein. Das Dosierelement 30 ist mittels Schnellspannern 44 mit dem Zwischenstück 50 lösbar verbunden. Das folienförmige Material 20 ist über den Ringspalt 22 und durch das Zwischenstück 50 in das Dosierelement 30 hinein- und über den schlitzförmigen Auslass 34 aus diesem herausgeführt worden und bedeckt somit die Einlassöffnung 33 des Zwischenstückes 50, die Wandungen 39 und 37 des Zwischenstückes 50 und des Dosierelementes 30 sowie dessen schlitzförmigen Auslass 34. Das aus dem schlitzförmigen Auslass 34 herausragende folienförmige Material 20 ist im Ausführungsbeispiel mit einem befüllbaren Behälter 60 verbunden. Diese Befestigung wird über ein bandförmiges Klemmprofil 42 gewährleistet, dass mittels Schnellspanner 44 im Bereich der Einlassöffnung 61 des Behälters 60 verspannt ist.

Nach Beenden des Abfüllvorganges wird der Trichter, wenn nötig bzw. vorgeschrieben, gereinigt. Dazu wird zunächst der schlitzförmige Auslass 34 des Dosierelementes 30 geschlossen. Danach wird das folienförmige Material 20 unterhalb des Dosierelementes 30 abgebunden und durchtrennt oder verschweisst. Damit wird gleichzeitig der Behälter 60 verschlossen und kann entfernt werden. Dann wird der schlitzförmige Auslass 34 wieder geöffnet, um ein Abfliessen der Reinigungsmittel zuzulassen. Nach Beenden der Reinigung wird der schlitzförmige Auslass 34 des Dosierelementes 30 geschlossen und das aus dem schlitzförmigen Auslass 34 herausragende Ende des folienförmigen Materials 20 dicht abgebunden. Nach dem Entspannen der Schnellspanner 44 wird das Dosierelement 30 vom Zwischenstück 50 abgezogen. Zur Sicherheit kann das folienförmige Material 20 erneut unterhalb des Zwischenstückes 50 abgebunden werden. Das Zwischenstück 50 wird nun auf dem Auslaufstutzen 12 in Richtung des Trichtereinlasses 13 geschoben und gleichzeitig das folienförmige Material 20 in entgegengesetzter Richtung durch das Zwischenstück 50 gezogen, bis ausreichend unverschmutztes folienförmiges Material 20 unterhalb des Auslaufstutzens 12 zur Verfügung steht.

Der verschmutzte Bereich des folienförmigen Materials 20 wird abgebunden, abgetrennt und entsorgt. Nach Absenken des Zwischenstückes 50, Fixieren des Dosierelementes 30 und Herausführen des folienförmigen Materials 20 aus dem schlitzförmigen Auslass 34 kann ein neuer Dosiervorgang begonnen werden. Das Dosierelement 30 hatte, ebenso wie das Zwischenstück 50, keinen direkten Kontakt mit dem Dosiergut, muss daher nicht aufwändig und teuer gereinigt und/oder auf Kontaminationen kontrolliert werden und steht somit fast unmittelbar nach der Benutzung für weitere Dosiervorgänge zur Verfügung.

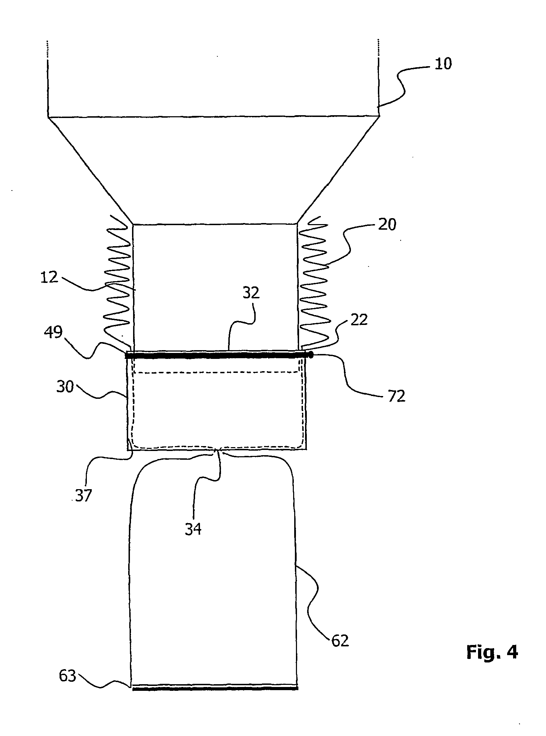

In Fig. 4 wird das Dosierelement 30 an einem Vorratsbunker 10 für Schüttgüter verwendet. Ein folienförmiges Material 20 ist im Bereich des Auslaufstutzens 12 als Endlosschlauch bevorratet. Das Dosierelement 30 ist mittels eines Bridenbandes 49 im unteren Bereich des Auslaufstutzens 12 verspannt. Die Spannung des Bridenbandes 49 erfolgt durch Anlegen der Bridenschraube 72. Das folienförmige Material 20 wurde durch den Ringspalt 22 in das Dosierelement 30 ein- und durch dieses hindurchgeführt. Dadurch wird die Innenseite 37, die Einlassöffnung 32 und die schlitzförmige Auslassöffnung 34 mit dem folienförmigen Material 20 bedeckt. Die schlitzförmige Auslassöffnung 34 behält trotz des durch sie hindurchgeführten folienförmigen Materials 20 ihre Funktion bei und gewährleistet eine ordnungsgemässe Dosierung des Schüttgutes bzw. die bedarfsweise Unterbrechung des Produktflusses. Das folienförmige Material 20 weist im Ausführungsbeispiel der Fig. 4 zusätzlich eine verschweisste Bodennaht 63 auf. Durch diese wird aus dem folienförmigen Material 20 ein Sack 62 zur Aufnahme des zu dosierenden Gutes gebildet. Nach Abschluss des Dosiervorganges erfolgt ein Verschweissen des folienförmige Materials 20 knapp unterhalb der schlitzförmige Auslassöffnung 34, um somit zum einen den befüllten Sack 62 zu verschliessen und zum anderen, um die Bodennaht 63 für den nächsten zu befüllenden Sack 62 zu schaffen. Um die Kontamination der Umgebung nach dem Verschweissen möglichst gering zu halten, kann das folienförmige Material 20 nach dem Dosier- und vor dem Verschweissvorgang zusätzlich unterhalb des Dosierelementes 30 abgebunden werden. Die Bodennaht 63 kann bei weniger sensiblen Schüttgütern natürlich auch auf andere Art als durch Verschweissen angebracht werden. Denkbar ist hierbei bei Verwendung eines geeigneten folienförmigen Materials 20, beispielsweise das Nähen der Bodennaht 63 mit einer handgeführten Sacknähmaschine.

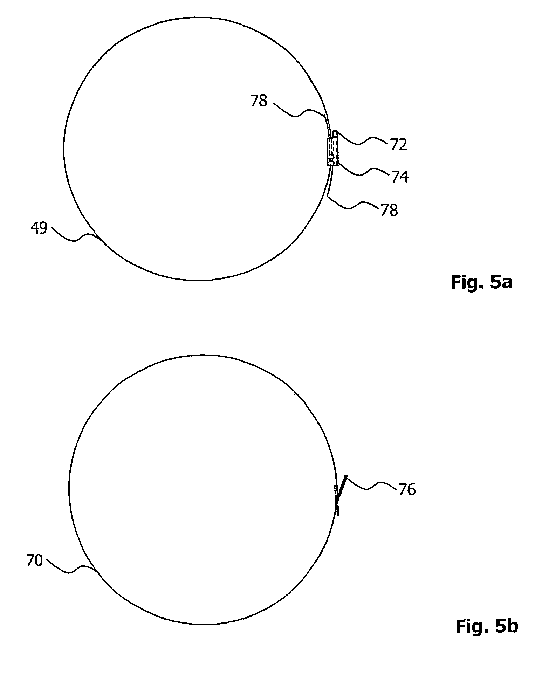

Fig. 5a zeigt ein Bridenband 49, das für alle im Rahmen der vorliegenden Erfindung auftretenden Spannaufgaben verwendet werden kann. Die Endbereiche 78 des Bridenbandes 49 überlappen im Bereich der Bride 74 und werden über die Bridenschraube 72 gespannt. Das Spannen erfolgt nach dem Anbringen eines oder mehrerer Bridenbänder 49 an entsprechenden Stellen am Dosierelement 30, dem Zwischenstück 50, dem Behälter 60 und/oder dem Auslaufstutzen 12.

Eine weitere Ausführungsform eines Spannmittels ist in Fig. 5b dargestellt. Hier wird ein Spannband 70 gezeigt, das ebenfalls als Spannmittel eingesetzt werden kann. Das Spannen erfolgt nach dem Anbringen des Spannbandes 70 an der gewünschten Position des Dosierelementes 30, des Zwischenstückes 50, des Behälters 60 und/oder des Auslaufstutzens 12 durch Anlegen des Spannhebels 76. Durch die daraus resultierende Verkürzung des Spannbandes 70 erfolgt das Spannen.

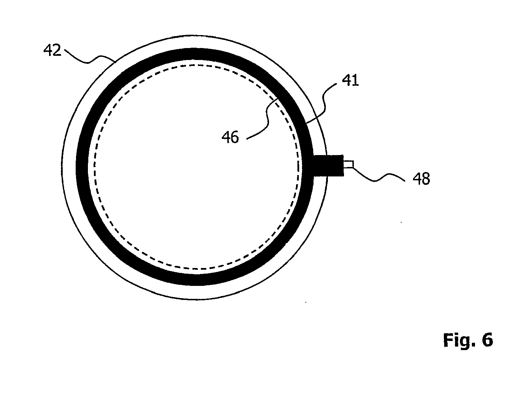

Fig. 6 zeigt in Draufsicht ein Dichtprofil 41. Das Dichtprofil 41 ist umlaufend und schlauchförmig mit einer Klemmfläche 46 ausgebildet. Durch Luftzuführung bzw. - entnahme über ein Pneumatikventil 48 kann die Dicke des Dichtprofils 41 gesteuert werden. Die grösstmögliche Ausdehnung des aufgeblasenen Dichtprofils 41 wird in Fig. 6 als unterbrochene Linie dargestellt. Das folienförmige Material 20 kann somit über die Klemmfläche 46 des Dichtprofils 41 entweder an den Auslaufstutzen 12 angepresst oder von diesem gelöst werden. Durch das Anpressen tritt zusätzlich ein Dichteffekt ein, der während des Abfüllens das Austreten des zu dosierenden Materials wirkungsvoll verhindert. Das Dichtprofil 41 ist von einem aus einer u-förmigen Schiene gefertigten Klemmprofil 42 aufgenommen, an dem eine das Zwischenstück 50 bildende Verlängerung durch Anschweissen oder Abkanten gebildet ist.

## Patentansprüche

1. Dosierelement (30) an einem Behälter (10, 11) für Fliess- oder Schüttgüter mit einem in das Dosierelement (30) hineinragenden Auslaufstutzen (12) umfassend:
- eine Einlassöffnung (32) an der dem Behälter (10, 11) zugewandten Seite,
- ein Klemmprofil (42) und/oder Schnellspanner (44) zum lösbaren Verbinden von Auslaufstutzen (12) und Dosierelement (30),
- eine schlitzförmige Auslassöffnung (34) in der vom Behälter (10, 11) abgewandten Seite,
- einen Ringspalt (22) zwischen Auslaufstutzen (12) und Einlassöffnung (32),
- eine sich zwischen Einlass-(32) und Auslassöffnung (34) erstreckende Wandung (36) mit einer Innen-(37) und einer Aussenseite (38), und
- ein im Bereich des Auslaufstutzens (12) bevorratetes, folienförmiges Material (20), insbesondere eine Kunststofffolie,
**dadurch gekennzeichnet, dass**
die Einlassöffnung (32), die Innenseite (37) der Wandung (36) und die schlitzförmige Auslassöffnung (34) mit dem folienförmigen Material (20) überdeckt ist.

2. Dosierelement (30) nach Anspruch 1,
**dadurch gekennzeichnet, dass**
das folienförmige Material (20) als Endlosschlauch ausgeformt ist.

3. Dosierelement (30) nach Anspruch 1,
**dadurch gekennzeichnet, dass**
das folienförmige Material (20) als Schlauchabschnitt ausgeformt ist.

4. Dosierelement (30) nach Anspruch 1,
**dadurch gekennzeichnet, dass**
das folienförmige Material (20) als Endlosfolienband bevorratet ist.

5. Dosierelement (30) nach einem der vorhergehenden Ansprüche,
**dadurch gekennzeichnet, dass**
das folienförmige Material (20) lösbar, insbesondere durch Klemmen (40) und/oder Schnellspanner (44), mit dem Auslaufstutzen (12) verbunden ist.

6. Dosierelement (30) nach einem der vorhergehenden Ansprüche,
**dadurch gekennzeichnet, dass**
das Dosierelement (30) im Bereich einer der Öffnungen (32, 34) eine Folientrennvorrichtung aufweist.

7. Dosierelement (30) nach Anspruch 4,
**dadurch gekennzeichnet, dass**
das Dosierelement (30) im Bereich der Einlassöffnung (32) eine Längsnaht-Folienschweissvorrichtung aufweist.

8. Dosierelement (30) nach einem der vorhergehenden Ansprüche,
**dadurch gekennzeichnet, dass**
das Dosierelement (30) im Bereich zwischen der Auslassöffnung (34) des Behälters (10, 11) und der Einlassöffnung (32) des Dosierelements (30) ein als Stutzen ausgebildetes Zwischenstück (50) aufweist.

9. Verfahren zum Abfüllen von Füll- oder Schüttgütern,
**dadurch gekennzeichnet, dass**
ein schlauchförmiges Folienmaterial (20) in ein Dosierelement (30) über einen Ringspalt (22) zugeführt wird,
dann durch das Dosierelement (30) hindurchgeführt wird und
schliesslich durch eine schlitzförmige Auslassöffnung (34) aus dem Dosierelement (30) herausgeführt wird.

10. Verfahren nach Anspruch 9,
**dadurch gekennzeichnet, dass**
das folienförmige Material (20) an dem Auslaufstutzen (12) geklemmt befestigt wird.

11. Verfahren nach Anspruch 9,
**dadurch gekennzeichnet, dass**
ein bandförmiges Folienmaterial (20) nach dem Zuführen über den Ringspalt (22) und vor dem Hindurchführen durch das Dosierelement (30) zu einem Schlauch verschweisst wird.

12. Verfahren nach einem der Ansprüche 9, 10 oder 11,
**dadurch gekennzeichnet, dass**
zwischen dem Auslassstutzen (12) und dem Dosierelement (30) ein zusätzliches, mit einer abdichtenden Klemm- und/oder Spannvorrichtung, insbesondere einer Dichtmanschette (52), versehenes und/oder als Stutzen ausgebildetes Zwischenstück (50) eingefügt wird.

## Claims

1. Dosage-dispensing element (30) on a container (10, 11) for free-flowing or pourable bulk materials with an outlet spout (12) that reaches into the dosage-dispensing element (30), comprising:
- an inlet opening (32) on the side facing towards the container (10, 11),
- a clamping profile (42) and/or a quick-tightening device (44) serving to make a releasable connection between the outlet spout (12) and the dosage-dispensing element (30),
- a slot-shaped outlet opening (34) on the side that faces away from the container (10, 11),
- a ring gap (22) between the outlet spout (12) and the inlet opening (32),
- a wall (36) extending between the inlet opening (32) and the outlet opening (34) with an inside (37) and an outside (38), and
- a foil-shaped material (20), in particular a polymer foil, stored in the area of the outlet spout (12),
**characterized in that**
the inlet opening (32), the inside (37) of the wall (36) and the slot-shaped outlet opening (34) are covered with the foil-shaped material (20).

2. Dosage-dispensing element (30) according to claim 1,
**characterized in that** the foil-shaped material (20) is configured as an endless hose.

3. Dosage-dispensing element (30) according to claim 1, **characterized in that** the foil-shaped material (20) is configured as a hose section.

4. Dosage-dispensing element (30) according to claim 1, **characterized in that** the foil-shaped material (20) is stored in the form of an endless foil ribbon.

5. Dosage-dispensing element (30) according to one of the preceding claims, **characterized in that** the foil-shaped material (20) is releasably connected to the outlet spout (12), in particular by clamps (40) and/or quick-tightening devices (44).

6. Dosage-dispensing element (30) according to one of the preceding claims, **characterized in that** the dosage-dispensing element (30) comprises a foil-separating device in the area of one of the openings (32, 34).

7. Dosage-dispensing element (30) according to claim 4, **characterized in that** the dosage-dispensing element (30) comprises in the area of the inlet opening (32) a foil-welding device for producing a weld seam running lengthwise in the foil.

8. Dosage-dispensing element (30) according to one of the preceding claims, **characterized in that** the dosage-dispensing element (30) comprises in the area between the outlet opening (34) of the container (10, 11) and the inlet opening of the dosage-dispensing element an intermediate part (50) which is configured as a short tubular section.

9. Method for filling free-flowing or pourable bulk materials into receptacles, **characterized in that**
- a hose-shaped foil material (20) is delivered through a ring gap (22) into a dosage-dispensing element (30),
- said hose-shaped foil material (20) is then passed through the dosage-dispensing element (30) and
- is finally passed through a slot-shaped outlet opening (34) to the outside of the dosage-dispensing element (30).

10. Method according to claim 9, **characterized in that** the foil-shaped material (20) is connected to the outlet spout (12) by clamping.

11. Method according to claim 9, **characterized in that** a foil material (20) in the form of a ribbon, after having been introduced through the ring gap (22) and prior to being passed through the dosage-dispensing element (30), is welded together into a hose.

12. Method according to one of the claims 9, 10 or 11, **characterized in that** an additional intermediate part (50) is set in between the outlet spout (12) and the dosage-dispensing element (30), wherein said intermediate part (50) is equipped with a clamping- and/or tightening device that performs a sealing function, in particular with a sealing sleeve (52), and/or the intermediate part (50) is configured as a short tubular section.

## Revendications

1. Elément de dosage (30) sur un récipient (10, 11) pour des matières fluides ou matières en vrac doté d'une tubulure de sortie (12) dépassant à l'intérieur de l'élément de dosage (30) comprenant :
- une ouverture d'entrée (32) sur le côté tourné vers le récipient (10, 11),
- un profil de serrage (42) et/ou un dispositif de serrage rapide (44) pour la liaison amovible de la tubulure de sortie (12) et de l'élément de dosage (30),
- une ouverture de sortie (34) en forme de fente sur le côté opposé au récipient (10, 11),
- une fente annulaire (22) entre la tubulure de sortie (12) et l'ouverture d'entrée (32),
- une paroi (36) s'étendant entre l'ouverture d'entrée (32) et l'ouverture de sortie (34) avec un côté intérieur (37) et un côté extérieur (38), et
- un matériau (20) en forme de film, appliqué dans la zone de la tubulure de sortie (12), en particulier un film plastique,
**caractérisé en ce que**
l'ouverture d'entrée (32), le côté intérieur (37) de la paroi (36) et l'ouverture de sortie (34) en forme de fente sont recouverts avec le matériau (20) en forme de film.

2. Elément de dosage (30) selon la revendication 1,
**caractérisé en ce que**
le matériau en forme de film (20) est formé sous forme de flexible sans fin.

3. Elément de dosage (30) selon la revendication 1,
**caractérisé en ce que**
le matériau (20) en forme de film est conçu comme tronçon de flexible.

4. Elément de dosage (30) selon la revendication 1,
**caractérisé en ce que**
le matériau (20) en forme de film est appliqué sous forme de bande de film continu.

5. Elément de dosage (30) selon l'une quelconque des revendications précédentes,
**caractérisé en ce que**
le matériau (20) en forme de film est relié de façon amovible, en particulier par serrage (40) et/ou un dispositif de serrage rapide (44), à la tubulure de sortie (12).

6. Elément de dosage (30) selon l'une quelconque des revendications précédentes,
**caractérisé en ce que**
l'élément de dosage (30) présente un dispositif de séparation de film dans la zone de l'une des ouvertures (32, 34).

7. Elément de dosage (30) selon la revendication 4,
**caractérisé en ce que**
l'élément de dosage (30) présente un dispositif de soudage de film à soudure longitudinale dans la zone de l'ouverture d'entrée (32).

8. Elément de dosage (30) selon l'une quelconque des revendications précédentes,
**caractérisé en ce que**
l'élément de dosage (30) présente une pièce intermédiaire (50) conçue comme tubulure entre l'ouverture de sortie (34) du récipient (10, 11) et l'ouverture d'entrée (32) de l'élément de dosage (30).

9. Procédé pour le versement de matières de charge ou de matières en vrac,
**caractérisé en ce**
**qu'**un matériau de film (20) en forme de flexible est amené dans un élément de dosage (30) au moyen d'une fente annulaire (22),
est guidé ensuite à travers l'élément de dosage (30) et
est guidé enfin par une ouverture de sortie (34) en forme de fente à la sortie de l'élément de dosage (30).

10. Procédé selon la revendication 9,
**caractérisé en ce que**
le matériau (20) en forme de film est fixé de façon serrée sur la tubulure de sortie (12).

11. Procédé selon la revendication 9,
**caractérisé en ce**
**qu'**un matériau de film (20) en forme de bande est soudé après l' arrivée par la fente annulaire (22) et avant le passage à travers l'élément de dosage (30) pour former un flexible.

12. Procédé selon l'une quelconque des revendications 9, 10 ou 11,
**caractérisé en ce**
**qu'**une pièce intermédiaire (50) supplémentaire, dotée d'un dispositif de serrage et/ou de tension étanchéifiant, en particulier une garniture étanche (52), et/ou conçue comme tubulure, est insérée entre la tubulure de sortie (12) et l'élément de dosage (30).
